# EUROPÄISCHE PATENTSCHRIFT

(11) **EP 2 172 092 B1**
(45) Veröffentlichungstag und Bekanntmachung des Hinweises auf die Patenterteilung: **07.12.2016**
(21) Anmeldenummer: 09011788.8
(22) Anmeldetag: 16.09.2009
(51) Int. Cl.: A01B 71/06

(54) **Bodenbearbeitungsgerät**
Soil cultivation device
Appareil de traitement des sols

(30) Priorität: 23.09.2008 DE 102008048403
(43) Veröffentlichungstag der Anmeldung: 07.04.2010
(73) Patentinhaber: Lemken GmbH & Co. KG, 46519 Alpen (DE)
(72) Erfinder: Berendsen, Mark, 7044 AJ Lengel (NL); Werries, Dieter, 46419 Alpen (DE); Gebbeken, Martin, 46519 Alpen (DE); Paessens, Christian, 47661 Issum (DE); Lukas, Thomas, 48683 Ahaus Wüllen (DE)
(74) Vertreter: Schulte & Schulte

(56) Entgegenhaltungen:
- EP-A1- 0 196 427
- EP-A1- 0 530 479
- DE-U1- 9 213 091
- US-A- 3 908 398

## Beschreibung

Die Erfindung betrifft ein Bodenbearbeitungsgerät gemäß des Oberbegriffes des Patentanspruches 1.

Derartige Bodenbearbeitungsgeräte sind bekannt. Das deutsche Gebrauchsmuster G 92 13 091.7 zeigt ein entsprechendes Bodenbearbeitungsgerät. Unabhängig von dem vorhandenen Freiraum kann der Traktor nur wenig eingelenkt werden, da bei einer größeren Einlenkung die zulässige Abwinkelung einer zwischen Traktor und Gerät angeordneten Gelenkwelle überschritten ist. Weitwinkelgelenkwellen lassen zwar größere Abwinkelungen zu, sie sind aber für hohe Antriebsmomente nicht geeignet. Sie unterliegen einem großen Verschleiß, insbesondere bei größeren Abwinkelungen und größeren Antriebsmomenten. Bekannt sind auch Lösungen, bei der zwei übereinander angeordnete Winkelgetriebe zu einem Schwenkgetriebe zusammengefasst werden, die dann eine unbegrenzte Abwinkelung zulassen. Das Einschlagproblem wird dann zwar gelöst, aber der bauliche Aufwand ist dann unverhältnismäßig groß. Der Einsatz von mindestens zwei zusätzlichen Gelenkwellen ist dann immer noch erforderlich, insbesondere dann, wenn das Getriebe für den Antrieb der Arbeitswerkzeuge des Bodenbearbeitungsgerätes nicht im Schwenkgetriebe integriert werden kann. Aus der EP 0 196 427 A1 ist eine Zwischenlagerung bekannt, die allerdings auch noch keine zufriedenstellenden Ergebnisse in Bezug auf einen optimalen Einschlagwinkel des Traktors zum Gerät ermöglicht.

Der Erfindung liegt die Aufgabe zu Grunde, ein Bodenbearbeitungsgerät, wie z. B. eine aufgesattelte Kreiselegge oder eine aufgesattelte Bestellkombination zu schaffen, das einen großen Einschlagwinkel des Traktors zum Gerät problemlos zulässt, bei dem hohe Antriebsmomente über die Zapfwelle übertragen werden können und das baulich nicht aufwendig ist.

Diese Aufgabe wird erfindungsgemäß durch die kennzeichnenden Merkmale des Anspruches 1 gelöst.

Aufgrund der nachführbaren Zwischenlagerung wird bei jedem Lenkeinschlag des ziehenden Fahrzeuges oder des Traktors das Zwischengetriebe so mitgeführt, dass die Abwinkelungen im zulässigen Bereich bleiben. Dadurch, dass die Nachführung der Zwischenlagerung nur um 50 % der Winkeländerung zwischen Traktor und Gerät erfolgt, bleiben die Abwinkelungen der Gelenkwellen, die an die Durchtriebswelle des Zwischengetriebes angreifen identisch. Somit wird ein so genanntes Rattern der Gelenkwellen bei einer Kurvenfahrt sicher vermieden. Es können robuste Gelenkwellen eingesetzt werden, die auch sehr hohe Antriebsmomente übertragen können. Auch bei dem Einsatz des Bodenbearbeitungsgerätes als Bestellkombination mit zusätzlichen Säscharen hinter einem gezogenen Säwagen mit Zapfwelle bewirkt die erfindungsgemäße 50 % ige nachführbare Zwischenlagerung ebenfalls einen gleichförmigen und ratterfreien Antrieb der Werkzeuge, auch bei Kurvenfahrten mit engen Kurvenradien.

Erfindungsgemäß ist weiter vorgesehen, dass als Verbindungseinrichtung eine Zugschiene vorgesehen ist für die Verbindung Bodenbearbeitungsgerätes mit dem Dreipunktgestänge oder den Unterlenkern des ziehenden Fahrzeuges, an der im Abstand hinter der Zugschiene ein Ausleger angeordnet ist, an dem eine senkrechte Schwenkachse als Knickgelenk vorgesehen ist. Dadurch dass das Knickgelenk und damit auch die Zwischenlagerung im Abstand hinter der Zugschiene angeordnet ist, und zwar an einem stabilen Ausleger, wird für mehr Freiraum bei Kurvenfahrten gesorgt und auch für einen besseren spurtreuen Nachlauf des Gerätes gesorgt.

Die Erfindung sieht weiter vor, dass die Schwenkachse eine Verlängerung aufweist, die in ein bei Geradeausfahrt quer angeordnetes Schlitzloch einer Kreuzführung eingreift, dass Führungszapfen vorgesehen sind, die im jeweils gleichen Abstand zur Verlängerung der Schwenkachse zum einen an der Deichsel und zum anderen an dem Ausleger der Zugschiene angeordnet sind und dass die Führungszapfen in die Schlitzlöcher der Kreuzführung eingreifen und so die Führungseinrichtung für die Zwischenlagerung bildend ausgebildet sind. Die 50 % ige Nachführung der Zwischenlagerung wird hier über einfache Führungsmittel mit Führungszapfen und Schlitzlöchern bewerkstelligt.

Weitere Einzelheiten der Erfindung sind der Beschreibung und den Zeichnungen zu entnehmen.
- Figur 1: zeigt eine Draufsicht der antriebstechnischen Verbindung zwischen Traktor und Bodenbearbeitungsgerät bei Geradeausfahrt,
- Figur 2: zeigt eine Seitenansicht der Anordnung gemäß Figur 1,
- Figur 3: zeigt eine Draufsicht der antriebstechnischen Verbindung zwischen Traktor und Bodenbearbeitungsgerät bei einem Einschlagwinkel von 90° und
- Figur 4: eine Detailansicht der Zwischenlagerung bei einem Einschlagwinkel von 45°.

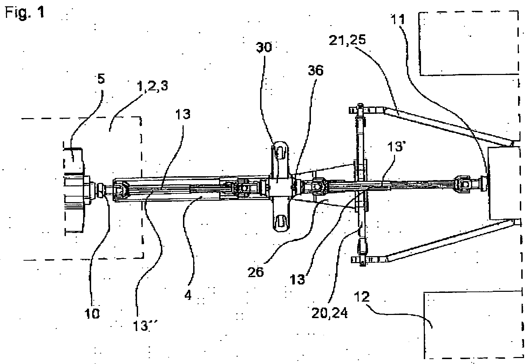

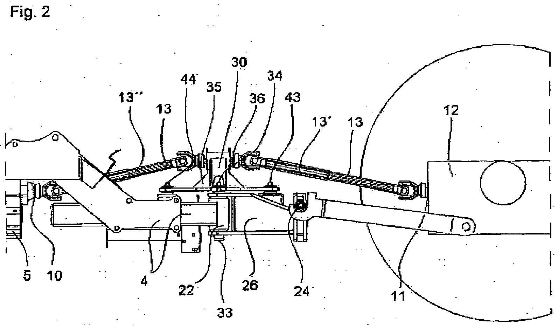

Figur 1 zeigt in Draufsicht das Heck des Traktors 12 mit der Zugeinrichtung 21. Die hier dargestellte Zugeinrichtung 21 besteht aus Unterlenkern 25. Die Unterlenker 25 nehmen die Verbindungseinrichtung 20 auf, die hier als Zugschiene 24 ausgebildet ist. Die Zugschiene 24 weist einen Ausleger 26 auf, der ca. 40 cm bis 50 cm lang ist. Der Ausleger 26 ist über ein Knickgelenk mit der Deichsel 4 verbunden. Einzelheiten darüber können der Figur 2, 3 und 4 entnommen werden. Oberhalb des Auslegers 26 und der Deichsel 4 ist die Zwischenlagerung 30 angeordnet. Von dem Bodenbearbeitungsgerät 1, einer aufgesattelten Kreiselegge 2 bzw. einer aufgesattelten Bestellkombination 3 ist nur das Vorderteil mit dem Getriebe 5 mit Eingangswelle 10 zu sehen. Die Eingangswelle 10 steht mit der Zapfwelle 11 über Gelenkwellen 13 und der Zwischenlagerung 30 mit Durchtriebswelle 36 in Verbindung. Vorne ist die Zapfwelle über die Gelenkwelle 13' mit der Durchtriebswelle 36 der Zwischenlagerung 30 verbunden. Hinten ist die Eingangswelle 10 über die Gelenkwelle 13" mit der Durchtriebswelle 36 der Zwischenlagerung 30 verbunden.

Figur 2 zeigt eine Seitenansicht der Anordnung gemäß Figur 1. Sie verdeutlicht insbesondere die Anordnung der Zwischenlagerung 30, die sich auf Höhe des Knickgelenkes 22 befindet. Je nach Ausführung kann die Zwischenlagerung 30 oberhalb des Knickgelenkes 22 angeordnet sein wie in Figur 2 dargestellt, aber auch darunter. Denkbar ist auch, dass bei einem zweischnittigen Knickgelenk 22, die Zwischenlagerung 30 zwischen den Schnittstellen des Knickgelenkes 22 angeordnet sein kann. Figur 2 verdeutlicht auch den großen Abstand bzw. Freiraum zwischen der Zugschiene 24 und der Gelenkwelle 13'. Der Abstand zwischen der Gelenkwelle 13' und der Zugschiene 24 wird größer, wenn die Durchtriebswelle 36 der Zwischenlagerung 30 höher oder weiter vorne angeordnet wird. Die Längen der Gelenkwellen 13' und 13" sind annähernd gleich. Dadurch dass die Zapfwelle 11 des Traktors 12 und die Eingangswelle 10 des Getriebes 5 fast auf gleicher Höhe liegen, sind die betriebstechnischen Beanspruchungen der beiden Gelenkwellen 13' und 13" fast identisch. Es können also zwei identische Gelenkwellen 13 eingesetzt werden. Der mit der Zugschiene 24 fest verbundene Ausleger 26 ist über das Knickgelenk 22 und der senkrecht angeordneten Schwenkachse 33 mit der Deichsel 4 verbunden. Die Schwenkachse 33 weist oben eine Verlängerung 34 auf, die zusammen mit den Führungszapfen 43 und 44 und hier nicht dargestellten Schlitzlöchern die Zwischenlagerung 30 über die Kreuzführung 35 so führt, dass die Gelenkwellen 13' und 13" um den gleichen Betrag bei einer Kurvenfahrt abgewinkelt werden. Bei einer Geradeausfahrt des Gerätes befinden sich die Verlängerung 34 der Schwenkachse 33 und die Führungszapfen 43 und 44 auf einer Linie. Der Abstand der Führungszapfen 43 und 44 zur Verlängerung 34 der Schwenkachse 33 ist identisch.

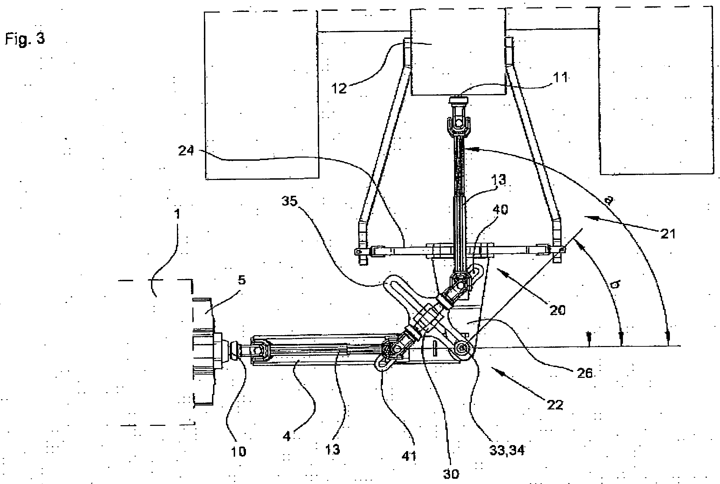

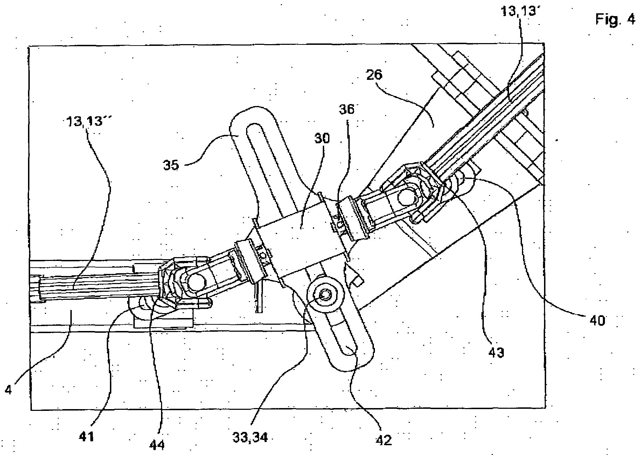

Figur 3 verdeutlicht, wie die Zwischenlagerung 30 über die Kreuzführung 35, den Führungszapfen 43,44 und der Verlängerung 34 der Schwenkachse 33 nachgeführt wird, und zwar zwangsgeführt. Die Führungszapfen 43, 44 werden bei dieser Winkelstellung durch die Kreuzführung 35 verdeckt. In der Figur 4 sind die Führungszapfen nur teilweise verdeckt. Die Figur 3 verdeutlicht auch, dass bei einer Abwinkelung des Traktors 12 bzw. seiner Zapfwelle 11 zum Bodenbearbeitungsgerät 1 bzw. zur Eingangswelle 10 mit dem Winkel a = 90°, die Zwischenlagerung 30 nur um den Winkel b = 45° nachgeführt wird. Dies stellt sicher, dass die Gelenkwellen 13 im Bereich der Zwischenlagerung 30 um den gleichen Winkelbetrag abgewinkelt werden.

Figur 4 zeigt eine Detailansicht des Ausschnittes gemäß Figur 3, allerdings nicht mit einem Winkel a von 90°; sondern einen Winkel a von ca. 45°. Bei dieser Winkeleinstellung wird erkennbar, dass der Führungszapfen 43 in den Schlitz 40 eingreift und der Führungszapfen 44 in das Schlitzloch 41. Auch bei dieser Winkelstellung wird die Zwischenlagerung 30 mit der Durchtriebswelle 36 nur um den halben Winkelbetrag vom Winkel a nachgeführt. Im Vergleich zu Figur 3 befindet sich hier die Verlängerung 34 der Schwenkachse 33 in Draufsicht näher zur Durchtriebswelle 36. Bei einer Geradeausfahrt befindet sich die Verlängerung 34 der Schwenkachse 33 genau unterhalb der Zwischenlagerung 30. Insgesamt wird so verdeutlicht, dass die Zwischenlagerung 30 über die Kreuzführung 35 den Führungszapfen 43 und 44 den Schlitzlöchern 40, 41 und 42 und auch der Schwenkachse 33 mit Verlängerung 34 so nachgeführt wird, dass immer ein störungsfreier Antrieb der Gelenkwellen sichergestellt ist und damit auch ein störungsfreier Betrieb des Bodenbearbeitungsgerätes.

## Patentansprüche

1. Bodenbearbeitungsgerät (1) wie aufgesattelte Kreiselegge (2) oder aufgesattelte Bestellkombination (3), mit einer Deichsel (4) und einem Fahrwerk mit mindestens einer Achse und mit einem Getriebe (5) mit Eingangswelle (10), die mit der Zapfwelle eines ziehenden Fahrzeuges wie einem Traktor oder einem gezogenen Säwagen über eine oder mehrere Gelenkwellen (13) antriebstechnisch in Verbindung steht, wobei das Bodenbearbeitungsgerät (1) über eine Verbindungseinrichtung (20) mit der Zugeinrichtung des ziehenden Fahrzeuges derart verbunden ist, dass ein Nachlauf des Bodenbearbeitungsgerätes (1) über ein Knickgelenk (22) auch bei Kurvenfahrt ermöglicht ist und wobei zwischen der Zapfwelle des ziehenden Fahrzeuges und der Eingangswelle (10) des Getriebes (5) eine Zwischenlagerung (30) vorgesehen ist, die bei Geradeausfahrt auf Höhe des Knickgelenks (22) angeordnet ist, wobei eine Führungseinrichtung vorgesehen ist, die die Zwischenlagerung (30) bei einem Winkeleinschlag des ziehenden Fahrzeuges zum Bodenbearbeitungsgerät mit einem ersten Winkel (a) für eine Kurvenfahrt mit einem zweiten Winkel (b) nachführend ausgebildet ist und dass der zweite Winkel (b) in etwa halb so groß ist wie der erste Winkel (a) und wobei zwei Gelenkwellen (13) vorgesehen sind, die zwischen der Zapfwelle (11) und der Durchtriebswelle (36) der Zwischenlagerung (30) und zwischen der Durchtriebswelle (36) und der Eingangswelle (10) angeordnet sind und dass als Verbindungseinrichtung (20) eine Zugschiene (24) vorgesehen ist für die Verbindung des Bodenbearbeitungsgerätes (1) mit dem Dreipunktgestänge oder den Unterlenkern des ziehenden Fahrzeuges, an der im Abstand hinter der Zugschiene (24) ein Ausleger (26) angeordnet ist, an dem eine senkrechte Schwenkachse (33) als Knickgelenk (22) vorgesehen ist,
**dadurch gekennzeichnet,**
**dass** die Schwenkachse (33) eine Verlängerung (34) aufweist, die in ein bei Geradeausfahrt quer angeordnetes Schlitzloch (42) einer Kreuzführung (35) eingreift, dass Führungszapfen (43) und (44) vorgesehen sind, die im jeweils gleichen Abstand zur Verlängerung (34) der Schwenkachse (33) zum einen an der Deichsel (4) und zum anderen an dem Ausleger (26) der Zugschiene (24) angeordnet sind und dass die Führungszapfen (43), (44) in die Schlitzlöcher (40), (41) der Kreuzführung (35) eingreifen und so die Führungseinrichtung für die Zwischenlagerung (30) bildend ausgebildet sind.

2. Bodenbearbeitungsgerät nach Anspruch 1,
**dadurch gekennzeichnet,**
**dass** die Gelenkwellen (13', 13") zumindest annähernd gleich lang ausgebildet sind.

3. Bodenbearbeitungsgerät nach Anspruch 1,
**dadurch gekennzeichnet,**
**dass** eine durch eine Kreuzführung (35) und Führungszapfen (43, 44) gebildete Zwangsführung der Zwischenlagerung (30) vorgesehen ist.

4. Bodenbearbeitungsgerät nach Anspruch 1,
**dadurch gekennzeichnet,**
**dass** die Führungszapfen (43, 44) jeweils in einem Schlitz (40) und/oder in einem Schlitzloch (41) in der Zwischenlagerung (30) geführt sind.

## Claims

1. Soil cultivation implement (1) such as a coupled rotary harrow (2) or a coupled till and drill combination (3), with a drawbar (4) and a chassis with at least one axle and with a transmission (5) with an input shaft (10) that is connected for driving with the PTO shaft of a towing vehicle such as a tractor or a towed seed trailer by means of one or more cardan shafts (13), whereby the soil cultivation implement (1) is connected with the towing device of the towing vehicle by means of a coupling device (20) in such a way that after-running of the soil cultivation implement (1) is enabled through a break joint (22) even on bends, and whereby an intermediate bearing (30) is provided between the PTO shaft of the towing vehicle and the input shaft (10) of the transmission (5) that is arranged at the level of the break joint (22) when driving straight ahead, whereby a guide device is provided that is designed to track the intermediate bearing (30) on angling of the towing vehicle to the soil cultivation implement with a first angle (a) for driving on bends with a second angle (b) and that the second angle (b) is approximately half the size of the first angle (a) and whereby two cardan shafts (13) are provided that are arranged between the PTO shaft (11) and the drive shaft (36) of the intermediate bearing (30) and between the drive shaft (36) and the input shaft (10) and that a pull bar (24) is provided as coupling device (20) for connecting the soil cultivation implement (1) with the three-point linkage or the lower links of the towing vehicle on which a boom (26) is arranged at a clearance behind the pull bar (24) on which a vertical pivot pin (33) is provided as the break joint (22),
**characterised in that**
the pivot pin (33) has an extension (34) that engages in the slotted hole (42) of a cross guide (35) that is crosswise during driving straight ahead, that guide pins (43) and (44) are provided that are each arranged at the same distance from the extension (34) of the pivot pin (33) on the one hand on the drawbar (4) and on the other on the boom (26) of the pull bar (24) and that the guide pins (43), (44) engage in the slotted holes (40), (41) of the cross guide (35) and are formed in this way to form the guide device for the intermediate bearing (30).

2. Soil cultivation implement in accordance with claim 1
**characterised in that**
the cardan shafts (13', 13"') are designed to be at least approximately the same length.

3. Soil cultivation implement in accordance with claim 1
**characterised in that**
a positive drive of the intermediate bearing (30) formed by a cross guide (35) and guide pins (43, 44) is provided.

4. Soil cultivation implement in accordance with claim 1
**characterised in that**
the guide pins (43, 44) are each led into a slot (40) and/or in a slotted hole (41) in the intermediate bearing (30).

## Revendications

1. Appareil de travail du sol (1) tel qu'une herse rotative semi-portée (2) ou une combinaison semi-portée (3), avec un timon (4) et un train avec au moins un essieu et un engrenage (5) avec arbre d'entrée (10) qui est relié, au plan de la technique d'entraînement, à la prise de force d'un véhicule tracteur tel qu'un tracteur ou une remorque semoir tractée via un ou plusieurs arbres de transmission (13), sachant que l'appareil de travail du sol (1) est relié par l'intermédiaire d'un dispositif de liaison (20) au dispositif de traction du véhicule tracteur de manière à ce qu'un fonctionnement retardé de l'appareil de travail du sol (1) soit rendu possible grâce à une articulation (22), même dans les virages, et sachant qu'entre la prise de force du véhicule tracteur et l'arbre d'entrée (10) de l'engrenage (5) est prévu un roulement (30) qui est disposé à la hauteur de l'articulation (22) lors d'une sortie tout droit, sachant qu'il a été prévu un dispositif de guidage dans lequel le palier intermédiaire (30) est constitué de façon directionnelle avec un premier angle (a) si un angle apparaît entre le véhicule tracteur et l'appareil de travail du sol, et avec un second angle (b) en cas de conduite dans un virage, le second angle (b) représentant environ la moitié du premier angle (a) et sachant que deux arbres de transmission (13) sont prévus, lesquels sont disposés entre la prise de force (11) et l'arbre de dépassement (36) du palier intermédiaire (30) et entre l'arbre de dépassement (36) et l'arbre d'entrée (10), et qu'un rail de traction (24) est prévu en tant que dispositif de liaison (20) destiné à relier l'appareil de travail du sol (1) avec la tringle à trois points ou les tiges directrices inférieures du véhicule tracteur, sur lequel un patin (26) est disposé à une certaine distance derrière le rail de traction (24), sur lequel patin un axe pivotant (33) vertical est prévu en tant qu'articulation (22),
**caractérisé par le fait**
**que** l'axe pivotant (33) présente une prolongation (34) qui s'engrène dans le trou fendu (42) disposé dans le sens transversal d'un guidage en croix (35) quand on roule tout droit, que des pivots de guidage (43) et (44) sont prévus, qui sont chacun disposés à la même distance par rapport à la prolongation (34) de l'axe pivotant (33), d'une part par rapport au timon (4) et de l'autre par rapport à la flèche (26) du rail de traction (24) et que les pivots de guidage (43), (44) s'engrènent dans les fentes (40), (41) du guidage en croix (35) et sont ainsi constitués de manière à former le dispositif de guidage pour le palier intermédiaire (30).

2. Appareil de travail du sol selon la revendication 1,
**caractérisé par le fait**
**que** les arbres de transmission (13', 13") sont réalisés à peu près de la même longueur.

3. Appareil de travail du sol selon la revendication 1,
**caractérisé par le fait**
**qu'**un guidage forcé du palier intermédiaire (30) constitué d'un guidage en croix (35) et de pivots de guidage (43, 44) est prévu.

4. Appareil de travail du sol selon la revendication 1,
**caractérisé par le fait**
**que** chacun des pivots de guidage (43, 44) est guidé dans une fente (40) et/ou un trou fendu (41) dans le palier intermédiaire (30).
